# EUROPEAN PATENT APPLICATION

(11) **EP 1 734 417 A1**
(43) Date of publication of application: **20.12.2006**
(21) Application number: 05721209.4
(22) Date of filing: 15.03.2005
(51) Int. Cl.: G03H 1/16, G03H 1/22, G11B 7/0065, G11B 7/135

(54) **HOLOGRAM REPRODUCTION DEVICE AND HOLOGRAM REPRODUCTION METHOD**

(30) Priority: 31.03.2004 JP 2004106185
(71) Applicant: Pioneer Corporation, Tokyo 153-8654 (JP)
(72) Inventor: TACHIBANA, Akihiro Corp. R+D Lab.,Pioneer Corp., Saitama 3502288 (JP); ITO, Yoshihisa Corp. R+D Lab., Pioneer Corp., Saitama 3502288 (JP); OGASAWARA, Masakazu Corp. R+D Lab., Pioneer Corp., Saitama 3502288 (JP); TANAKA, Satoru Corp. R+D Lab., Pioneer Corp., Saitama 3502288 (JP); KUBOTA, Yoshihisa Corp. R+D Lab., Pioneer Corp., Saitama 3502288 (JP)
(74) Representative: Manitz, Finsterwald & Partner GbR
(86) International application number: PCT/JP2005/005059
(87) International publication number: WO 2005/098552

(57) **Abstract**

A hologram reproducing apparatus is provided that can be reduced in size. A hologram reproducing apparatus of the invention reproduces signal information from a recorded media having a domain of diffraction grating that is irradiated with a record light beam containing a coherent reference light component and a signal light component spatially modulated according to the signal information substantially on the same optical axis and is recorded an interference of the reference light component and the signal light component. The hologram reproducing apparatus comprises a light source for emitting a coherent light beam, a light-beam irradiator for irradiating the light beam to the domain of diffraction grating of the recording medium, a light collector for collecting a reproduced light beam reproduced by irradiating the light beam to the domain of diffraction grating toward a convergent position, an incident-light processing unit provided at the convergent position and for separating a Fourier 0-order component of the reproduced light beam and a diffraction light component of the reproduced light beam, and a detecting section for detecting the signal information from the diffraction component.

## Description

### Technical Field

The present invention relates to a hologram reproducing method and an optical information reproducing apparatus making use of a holographic memory.

### Background Art

A volume holographic memory system is known as a digital information recording system which applies the principle of holography. This system is characterized in that signal information is recorded as a change of refractive index to a recording medium formed of a photosensitive material, such as a photo-refractive material.

There is a conventional holographic recording and reproducing method utilizing the Fourier transform.

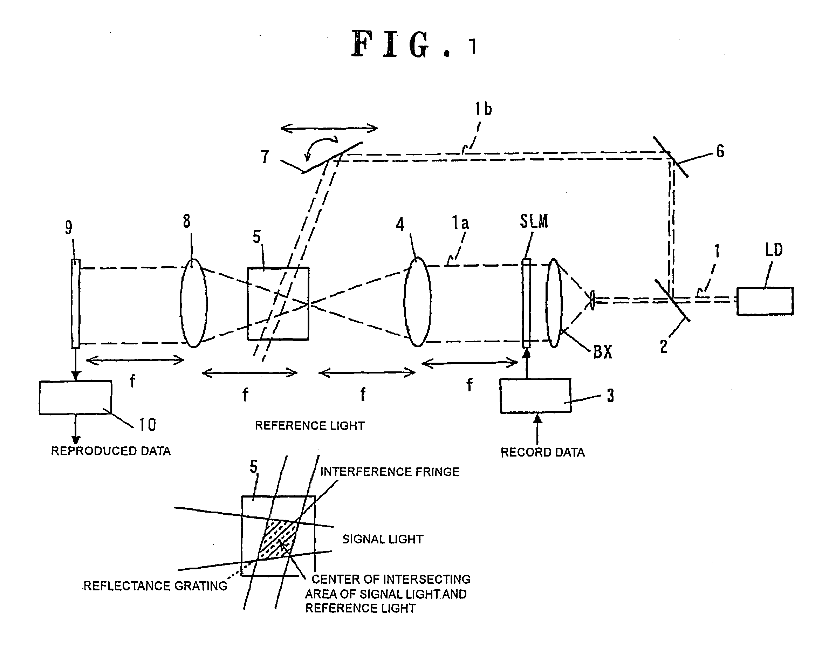

As shown in Fig. 1, in a conventional 4f-hologram recording and reproducing apparatus, a laser beam 1 emitted from a laser light source LD is split into a light beam 1a and a light beam 1b in a beam splitter 2. The light-beam 1a is expanded in beam diameter by a beam expander BX as a collimated light beam, and then irradiated to a spatial light modulator SLM such as a transmission-type TFT liquid crystal display (LCD) panel. The spatial light modulator SLM receives recording data converted to a signal by an encoder 3 as an electric signal, and forms two-dimensional data, i.e. signal information, such as of a light-and-dark two-dimensional dot pattern on a plane. When the light beam 1a is transmitted the spatial light modulator SLM, the light beam 1a is spatially optically modulated into a signal light beam containing a data signal component. The signal light beam 1a including the dot pattern signal component is transmitted through a Fourier transformation lens 4 separated by its focal length f from the spatial light modulator SLM so that the dot-pattern signal component is Fourier-transformed and is converged into a recording medium 5. At the same time, the light beam 1b separated at the beam splitter 2 is guided as reference light by mirrors 6, 7 into the recording medium 5, and caused to intersect and interfere with a light path of the signal light beam 1a and within the recording medium 5 thus forming a light interference pattern. The light interference pattern is entirely recorded as a diffraction grating in terms of refractive index change.

Thus, diffracted light from the dot-pattern data of an image irradiated by coherent parallel light is focused and formed as an image by the Fourier transformation lens, and is transformed to a distribution on a focal plane of the Fourier transformation lens, i.e., on a Fourier plane. The distribution as a result of the Fourier transformation interferes with the coherent reference light, and its interference fringe is recorded to the recording medium in the vicinity of a focal point. After the recording operation on a first page is terminated, a rotating mirror 7 is rotated by a predetermined amount and its position is displaced in parallel by a predetermined amount so that an incident angle of the recording reference light beam 1b with respect to the recording medium 5 is changed. The recording operation on a second page is then performed in the same procedure. Thus, an angle multiplex record is made by performing the sequential recording operation.

On the other hand, during reproduction, the dot-pattern image is reproduced by carrying out an inverse Fourier transform. In information reproduction, the optical path of signal light beam 1a is cut off by the spatial optical modulator SLM for example as shown in Fig. 1 to irradiate only the reference light beam 1b to the recording medium 5. During reproduction, the mirror is controlled to change its position and angle in combination of a mirror rotation and linear movement so as to provide the same incident angle as that of the reference light beam in recording the page to be reproduced. A reproducing light reproducing the recorded light interference pattern appears on an opposite side of the recording medium 5 irradiated by the recording reference light beam 1b. When this reproducing light is guided to an inverse Fourier transform lens 8 and subjected to inverse-Fourier-transform, a dot-pattern signal can be reproduced. Furthermore, the dot-pattern signal is received by an image detection sensor 9 located at a focal position and is reconverted into an electric digital data signal. Then, the electric digital data signal is delivered to a decoder 10, the former data is reproduced. In this manner, it is a practice to implement multi-recording in a volume of around several mm square of volume (see Japanese Patent kokai No. 2001-184637)

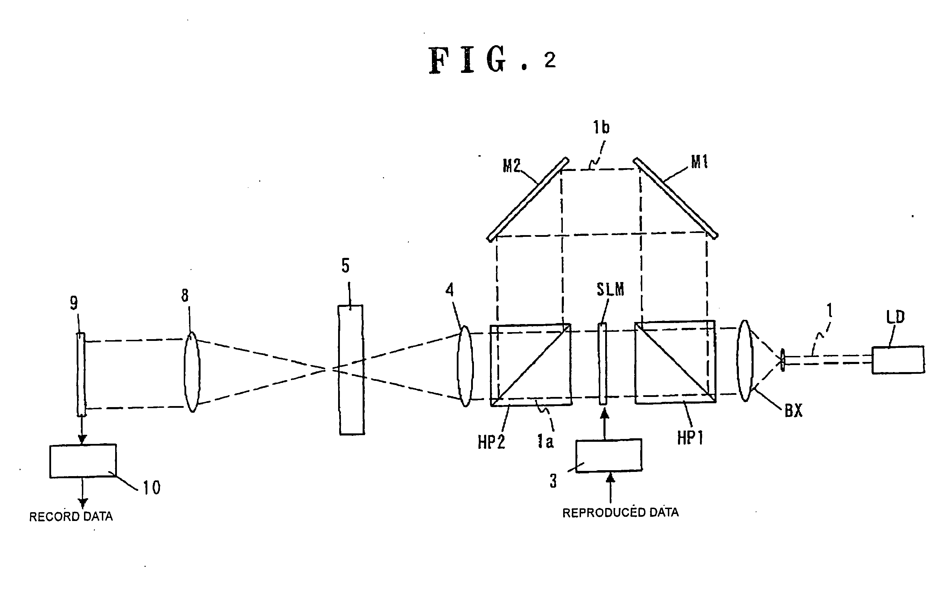

In the above multi-recording scheme, there is a problem that accurate control is needed for the rotation mirror 7, etc. and size-reduction is not easy for the apparatus. Consequently, there is proposed a method to carry out a multi-recording by parallel-moving the recording medium and recording optical system by use of a spherical wave (D. Psaltis, M. Levene, A. Pu, G. Barbastathis and K. Curtis; "Holographic storage using shift multiplexing", OPTICS LETTERS, Vol. 20, No. 7, (April 1, 1995) p.782-784). Fig. 2 shows a structure for carrying out a spatial multiplex by use of such a principle wherein the reference light beam and the signal light beam are used coaxially.

The conventional hologram recording apparatus as shown in Fig. 2 has a laser light source LD for emitting a coherent light beam 1, a beam expander BX and a first half prism. The first half-mirror prism HP1 separates the entering light beam 1 by transmitting the light beam in the same direction as the optical axis of the beam while reflecting the same vertically to the optical axis.

The light beam transmitted the first half-mirror prism HP1 turns into a signal light beam to be irradiated to enter a spatial light modulator SLM. The signal light beam passing the spatial light modulator SLM is optically modulated and turned into a signal light beam 1a containing data as a dot-matrix component. The signal light beam 1a is irradiated to enter a second half-mirror prism HP2.

The reference light beam 1b reflected by the first half-mirror prism HP1 is reflected by a first mirror M1 and a second mirror M2 to enter the second half-mirror prism HP2.

The second half-mirror prism HP2 transmits the signal light beam 1a traveling from the spatial light modulator SLM and reflects the reference light beam 1b traveling from the second mirror M2 vertically to the optical axis of the beam, i.e. in the same traveling direction as the signal light beam 1a.

The mixture light beam including the signal light beam 1a and the reference light beam 1b from the second half-mirror prism HP2 is irradiated to a Fourier transform lens 4. The Fourier transform lens 4 makes a Fourier transform on the dot-matrix component of the signal light beam 1a and collects the light in a manner focused onto a hologram recording medium 5.

During reproduction, the optical path of the signal light beam 1a is cut off by the spatial light modulator SLM similarly to the prior art example in Fig. 1, to thereby irradiate only the reference light to the recording medium. Due to this, the reproduced light from a diffraction grating formed in the recording medium is guided to an inverse Fourier transform lens 8, so that it can be light-received to reproduce the former data. This structure has a merit that application is easy for a plate-formed recording medium, particularly a disc-formed recording medium because multi-recording is available by merely moving the medium parallel. However, in this structure case, a non-diffracted component of reference light and the diffraction light component traveling from diffraction grating propagate along the same optical path during reproducing of information. Furthermore, the non-diffracted component of the reference light, generally, is higher in intensity as compared to the intensity of the diffraction light traveling from the diffraction grating. Accordingly, there is a problem of illegibility deterioration encountered in the reproduced signal.

### Disclosure of Invention

Therefore, the problem to be solved by the present invention includes, as one example, to provide a hologram reproducing method and a hologram reproducing apparatus for a hologram recording medium that can be reduced in size.

A hologram reproducing apparatus according to a certain feature of the present invention is a hologram reproducing apparatus for reproducing signal information from a domain of diffraction grating of a recording media that is irradiated with a record light beam containing a coherent reference light component and a signal light component spatially modulated according to the signal information substantially on the same optical axis and is recorded an interference of the reference light component and the signal light component, comprising: a light source for emitting a coherent light beam; a light-beam irradiator for irradiating the light beam to the domain of diffraction grating of the recording medium; a light collector for collecting a reproduced light beam reproduced by irradiating the light beam to the domain of diffraction grating toward a convergent position; an incident-light processing unit provided at the convergent position and for separating a Fourier 0-order component of the reproduced light beam and a diffraction light component of the reproduced light beam; and a detecting section for detecting the signal information from the diffraction component.

A hologram reproducing method according to another feature of the invention is a hologram reproducing method for reproducing signal information from a domain of diffraction grating of a recording media that is irradiated with a record light beam containing a coherent reference light component and a signal light component spatially modulated according to the signal information substantially on the same optical axis and is recorded an interference of the reference light component and the signal light component, comprising: an irradiation step of irradiating a coherent light beam to the domain of diffraction grating of the recording medium; a light collecting step of collecting a reproduced light beam reproduced by the irradiating step to the domain of diffraction grating toward a convergent position; an incident-light processing step of separating a Fourier 0-order component of the reproduced light beam and a diffraction light component of the reproduced light beam by an incident-light processing unit provided at the convergent position; and a reproducing step of reproducing the signal information from the diffraction component.

### Brief Description of Drawings

Fig. 1 shows a schematic structural view showing a hologram recording/reproducing system in the prior art.
Fig. 2 shows a schematic structural view showing a hologram recording/reproducing system in the prior art.
Fig. 3 shows a schematic structural view explaining a hologram recording apparatus for recording information to a hologram recording medium used in the invention.
Fig. 4 is a schematic structural view explaining an embodiment of the hologram reproducing apparatus according to the invention.
Fig. 5 is a graph and a chart explaining the operation of an incident-light processing unit used in the hologram reproducing apparatus in the embodiment of the invention.
Fig. 6 is a schematic structural view explaining a modification of the hologram reproducing apparatus according to the invention.
Fig. 7 is a schematic structural view explaining a modification of the hologram reproducing apparatus according to the invention.
Fig. 8 is a schematic structural view explaining a modification of the hologram reproducing apparatus according to the invention.
Fig. 9 is a graph and a chart explaining the operation of an incident-light processing unit used in the hologram reproducing apparatus in the embodiment of the invention.
Fig. 10 is a schematic structural view explaining a modification of the hologram reproducing apparatus according to the invention.
Fig. 11 is a schematic structural view explaining a modification of the hologram reproducing apparatus according to the invention.
Fig. 12 is a schematic structural view explaining a modification of the hologram reproducing apparatus according to the invention.
Fig. 13 is a graph and a chart explaining the operation of an incident-light processing unit used in the hologram reproducing apparatus in the embodiment of the invention.
Fig. 14 is a schematic structural view explaining a modification of the hologram reproducing apparatus according to the invention.
Fig. 15 is a schematic structural view explaining a modification of the hologram reproducing apparatus according to the invention.
Fig. 16 is a schematic structural view explaining a modification of the hologram reproducing apparatus according to the invention.
Fig. 17 is a schematic structural view explaining a modification of the hologram reproducing apparatus according to the invention.
Fig. 18 is a schematic structural view explaining a modification of the hologram recording apparatus for recording information to a hologram recording medium used in the invention.

### Best Mode for Carrying Out the Invention

A hologram reproducing method and a hologram reproducing apparatus according to the present invention will be explained below while referring to the drawings.

### <Hologram Recording Medium>

The hologram recording medium to be used in the hologram reproducing method and a hologram reproducing apparatus of the invention includes a recording medium region having a domain of diffraction grating due to an interference between a reference light component and a signal light component by irradiating the recording medium with a recording light beam containing a coherent reference light and a signal light component spatially modulated according to signal information substantially on the same optical axis of the beam.

The recording medium region is formed of a photosensitive material transmissive to light. The photosensitive material possesses photoconductivity and electro-optical effects (exhibiting a refractive index change proportional to the primary term of application electric field). This employs such a material as having donor and acceptor levels existing in a deep band-gap level, what is called photorefractive material, hole burning material, photochromic material, photopolymer material or the like. Namely, the photosensitive material uses a material capable of storing a light intensity distribution. The photorefractive material is suited for a reversible rewritable memory, because a refractive-index grating is written with without the use of chemical reaction. The photorefractive material includes semiconductor materials of AlGaAs/GaAs, InGaN/InGaN quantum wells, etc., dielectric materials of LiNbO₃, etc., and organic materials of charge-transfer-complex organic photosensitive materials (including those colored) containing PVK (polyvinyl carbazole)/TNF (trinitro fluorenone) or the like. The photopolymer material includes OmniDex, by DuPont, for example.

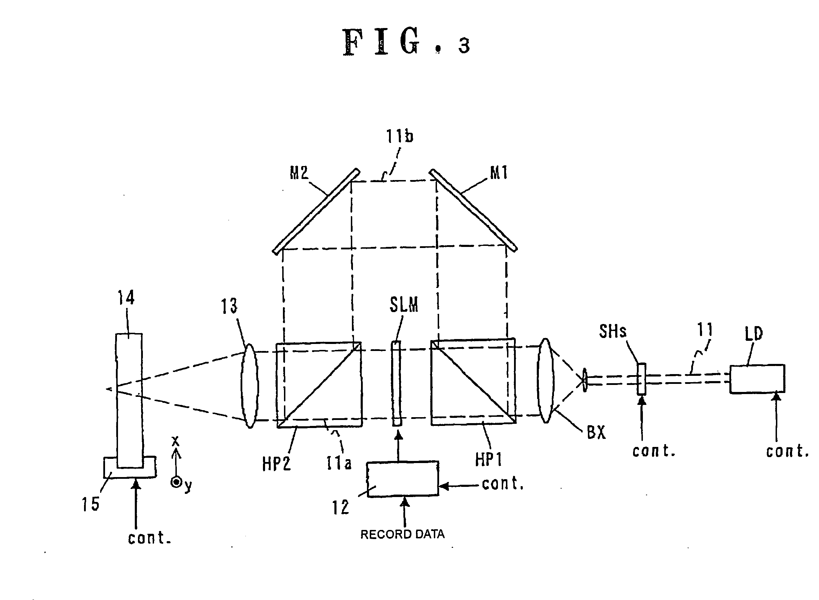

In the hologram recording medium including the recording medium region as above, signal information is recorded by recording a domain of diffraction grating corresponding to a light interference distribution caused by irradiating a reference light beam and a signal light beam carrying the information to be recorded, for example. For example, signal information can be recorded to the hologram recording medium by means of a hologram recording apparatus as shown in Fig. 3.

The hologram recording apparatus includes a laser light source LD for emitting a coherent light beam. The laser light source LD uses a DBR laser (Distributed Bragg Reflector) having a near-infrared laser-beam wavelength of 850 nm, for example.

The laser light source LD emits a light beam 11. On the optical path of light beam 11, there are arranged a shutter SHs and a beam expander BX. The shutter SHs is under control of the controller (cont.), to control the passage time of the light beam 11, i.e. light-beam irradiation time to the recording medium region, referred later. The beam expander BX expands the diameter of the light beam 11 passed the shutter SHs into a collimated ray of light.

The light beam 11 made into a collimated ray by the beam expander BX enters a first half-mirror prism HP1. The first half-mirror prism HP1 transmits the entering light beam 11 in the same direction as the optical axis of the beam and reflects it vertically to the optical axis, thus splitting the light beam.

The light beam transmitted the first half-mirror prism HP1 becomes a signal light beam and is irradiated to enter a spatial-light modulator SLM. The spatial-light modulator SLM can display a light-and-dark dot matrix signal by receiving the electric data (two-dimensional dot pattern data) corresponding to the to-be-recorded record data supplied from the encoder 12. When the signal light beam passes the spatial-light modulator SLM displayed with data, the beam is optically modulated and turned into a signal light beam 11a containing data as a dot-matrix component. The signal light beam 11a is irradiated to enter a second half-mirror prism HP2.

The reference light beam 11b reflected by the first half-mirror prism HP1 is reflected by a first mirror M1 and a second mirror M2 to enter the second half-mirror prism HP2.

The second half-mirror prism HP2 transmits the signal light beam 11a traveling from the spatial light modulator SLM and reflects the reference light beam 11b traveling from the second mirror M2 vertically to the optical axis of the beam, i.e. toward the same travelling direction as the signal light beam 11a. Accordingly, the second half-mirror prism HP2 serves as a confluence to join the signal light beam 11a and the reference light beam 11b together.

The mixture light beam of signal light beam 11a and reference light beam 11b traveling from the second half-mirror prism HP2 is irradiated to a Fourier transform lens 13. The Fourier transform lens 13 performs a Fourier transform of the dot-matrix component of the signal light beam 11a and focuses it at nearby the record medium region (not shown) of the hologram recording medium 14. Although the Fig. 3 example depicts to have a focus in back of the recording medium 14, focusing may be in front of the recording medium. In case the recording medium region (not shown) is sufficiently thick, focusing may be at the inside thereof. The hologram recording medium 14 is arranged such that the signal light beam 11a and the reference light beam 11b traveling from the Fourier transform lens 13 are irradiated at a predetermined incident angle (e.g. 0 degree) to an incident surface of the recording medium region during opening the shutter. The spatial-light modulator SLM is arranged in a focal distant location from the Fourier transform lens 13. The hologram recording medium 14 is mounted on a movable stage 15 as a support for moving the same. By operating the movable stage 15 and sequentially changing the irradiation point of reference light beam and signal light beam to the hologram recording medium, a plurality of domains of diffraction grating can be recorded. The movable stage 15 is connected to the controller so that the hologram recording medium can be controlled in position by receiving a control signal from the controller.

In the hologram recording apparatus constructed above, information can be recorded to the hologram recording medium as follows. The light beam 11 emitted from the laser light source LD transmits through the opened shutter SHs and the beam expander BX to enter the first half-mirror prism HP1. The first half-mirror prism HP1 splits into a signal light beam traveling in the same direction as the optical axis of the light beam 11 and a reference light beam traveling vertically to that optical axis.

The signal light beam passed the first half-mirror prism HP1 travels in the same direction as the optical axis of the unseparated optical beam 11 and transmits the spatial-light modulator SLM displayed with a light-and-dark dot matrix data by receiving two-dimensional dot pattern data supplied from the encoder 12. The signal light beam transmitted the spatial-light modulator SLM is optically modulated into a signal light beam 11a containing the data as a dot-matrix component. The signal light beam 11a enters the second half-mirror prism HP2.

The reference light beam 11b travels vertically to the optical axis of the unsplit light beam 11 and is reflected vertically by the first mirror M1 and the second mirror M2 to enter the second half-mirror prism HP2.

The second half-mirror prism HP2 joins the signal light beam 11a and the reference light beam 11b together in a manner to travel along nearly the same optical axis, and irradiates the signal light beam and the reference light beam to the Fourier transform lens 13. The Fourier transform lens 13 irradiates the signal light beam and the reference light beam to the recording medium region (not shown) of the hologram recording medium 14, and forms a light interference pattern based on the signal light beam and the reference light beam at the inside of the recording medium region. In the recording medium region, a diffraction-grating domain, such as of a refractive index change, corresponding to a light intensity distribution of the light interference pattern is recorded.

It will be described in the following description that an apparatus and method of reproducing a hologram recording medium to which recording has been done as above by the hologram recording apparatus.

### <Example 1>

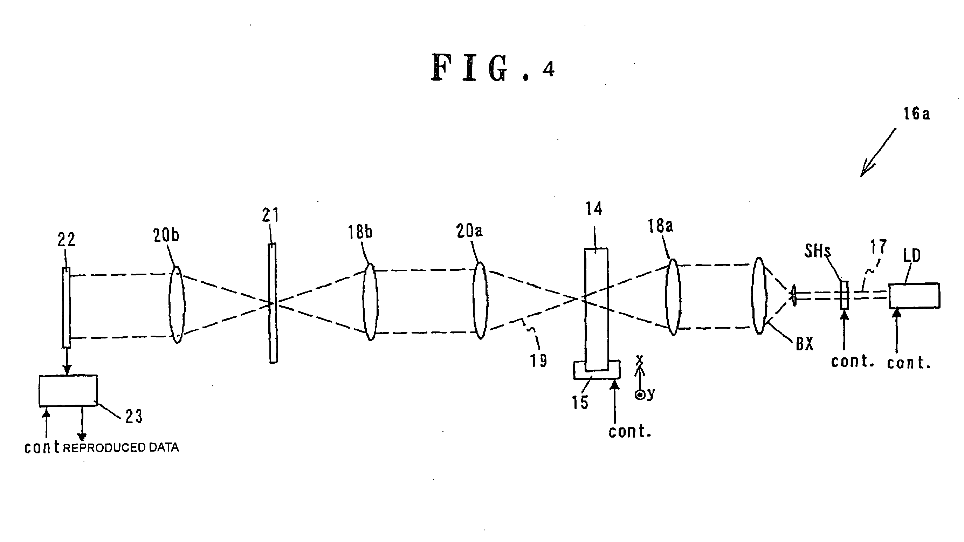

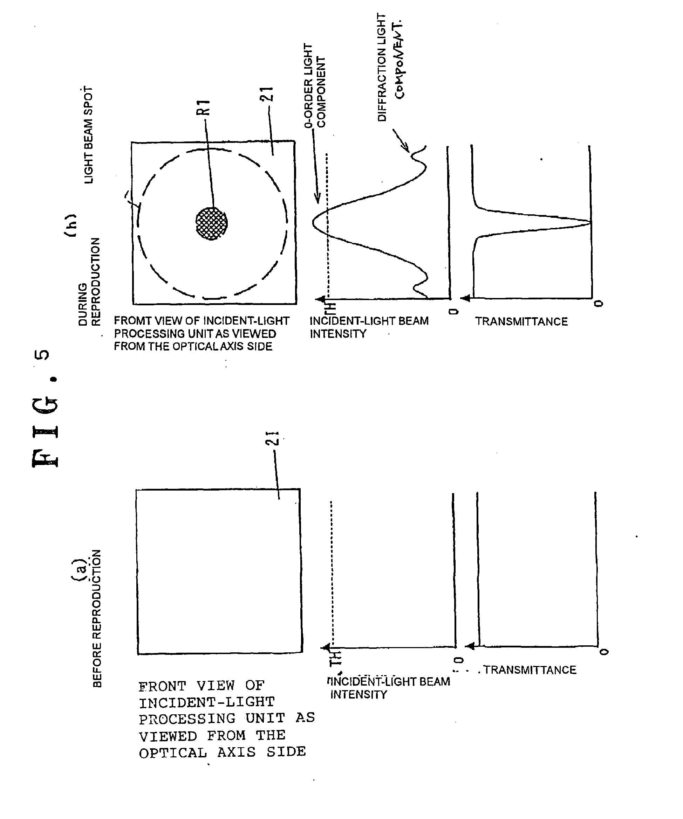

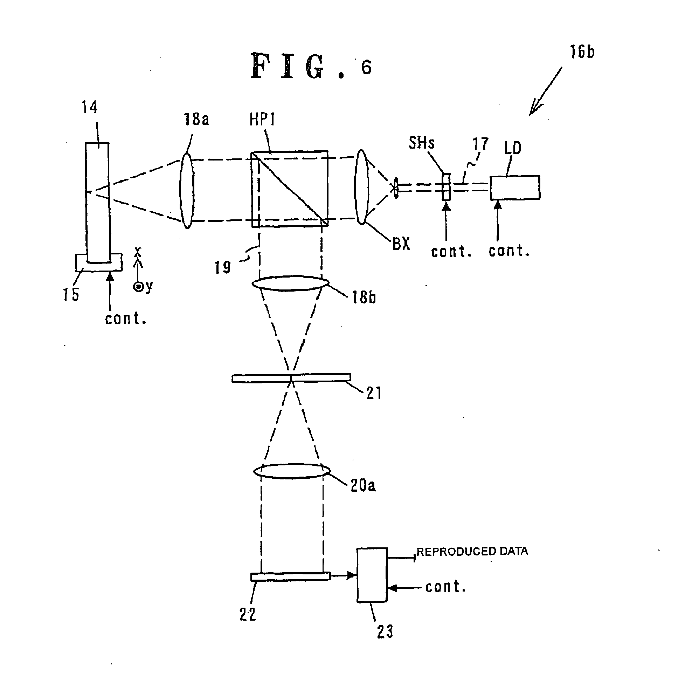

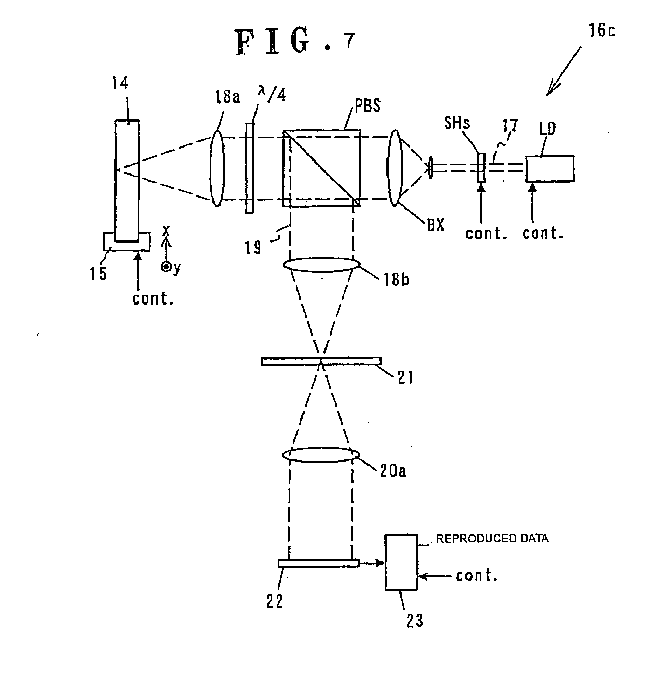

As shown in Fig. 4, a hologram reproducing apparatus 16a includes a laser light source LD for emitting a coherent light beam. The laser light source LD may emit a wavelength of light that signal information can be reproduced from the hologram recording medium, i.e. it may be a light source for issuing a laser beam equal in wavelength to the light beam used in recording a hologram onto the above hologram recording medium. The laser light source LD can employ a DBR (Distributed Bragg Reflector) laser having a near-infrared laser-light wavelength of 850 nm, for example.

The laser light source LD emits a light beam 17. On the optical path of the light beam 17, there are arranged a shutter SHs, a beam expander BX, a first objective lens 18a and a hologram recording medium 14 in the order.

The shutter SHs is under control of the controller (cont.). The controller takes control of a time of light beam passage, i.e. irradiation time of light beam to a hologram recording medium, referred later.

The beam expander BX expands the diameter of the light beam 17 passed the shutter SHs into a collimated ray of light.

The first objective lens 18a is arranged to collect light with respect to the position of mounting the recording medium region (not shown) of the hologram recording medium 14 such that the light beam 17 to become a reference light beam has a focal point the same as that of the reference light beam in recording. The shutter SHs, the beam expander BX and the first objective lens 18a form a light-beam irradiator.

The hologram recording medium 14 has signal information recorded as a diffraction grating region within the recording medium region (not shown) by the hologram recording apparatus or the like. Furthermore, this is mounted on a movable stage 15 as a support for moving the medium. By irradiating a reference light beam from the light-beam irradiator to the recording medium region, a reproduced light beam 19 corresponding to the recorded diffraction grating is derived at the side opposite to the incidence of the reference light beam. The reproduced light beam contains a non-diffracted component of reference light besides a diffraction light reproduced from the recorded diffraction grating. (In the specification, the non-diffracted component of reference light is referred to as 0-order light or 0-order light component.) On an optical path of the reproduced light beam 19, arranged are a first inverse Fourier transform lens 20a and a second objective lens 18b in the order. Those constitute a reproduced-light guide. The first inverse Fourier transform lens 20a is arranged coaxial with the first objective lens as a Fourier transform lens.

The second objective lens 18b collects the reproduced light beam and serves as a Fourier transform lens. At a focus position, there is arranged an incident-light processing unit 21 including an optical element formed of a photosensitive material that at least one characteristic value of reflectance, absorptance and transmittance changes relying upon an intensity of incident light beam. The photosensitive material uses a photosensitive-type light-transmissive material having a characteristic value that the transmittance in irradiating a light beam is lower than the transmittance in not irradiating a light beam.

The photosensitive-type light-transmissive material may include an oxide material, a photochromic material, a quantum-well-structured quantum confined layer, or a thermochromic material.

The oxide material is transparent usually (in the absence of irradiation or during irradiation lower than a predetermined light intensity). When the oxide material is irradiated by a light beam, a temperature of the oxide material at the center of the light beam is increased. A reduction reaction is caused in a domain exceeding a constant temperature, so that metal particles are extracted and the domain turns into an opaque. When temperature decreases, oxidation again occurs returning into a transparent oxide compound. For example, silver oxide may be used as the oxide material.

The photochromic material is transparent usually (in the absence of irradiation or during irradiation lower than a predetermined light intensity). However, the photochromic material is turn into an instable opaque state due to absorption of an irradiation light beam (at a center portion with high intensity) wherein the former state is returned when the light beam intensity is weakened.

The quantum-well-structured quantum confined layer is to have a reflectance increased at a center portion where higher in light beam intensity but suppressed to low at the peripheral portion where weak in light beam intensity.

Some of the thermochromic materials, though transparent usually (in the absence of irradiation or during irradiation lower than a predetermined light intensity), are to become opaque only in a domain exceeding a constant temperature wherein the former state is returned when the light beam intensity is weakened.

In the incident-light processing unit 21 containing an optical element of a material having one of the foregoing properties, the reflectance upon or absorptance of the incident-light processing unit is higher than the usual at a high intensity point of incident light beam. Accordingly, transmission intensity decreases at the high intensity point of incident light beam. The use of such an action allows the incident-light processing unit 21 to contribute to the separation of 0-order light and diffraction light in a reproduced light beam. The incident-light processing unit for allowing incident light to transmit at a low intensity point of incident light beam as above is referred to as a transmission-type incident-light processing unit.

On the optical path of the light transmitted the incident-light processing unit, there are arranged a second inverse Fourier transform lens 20b and an image detection sensor 22. The second inverse Fourier transform lens 20b is arranged coaxial to the second objective lens 18b. The image detection sensor 22 is arranged at a focal length point of the second inverse Fourier transform lens 20b and structured by an array of charge-coupled device CCD or complementary metal-film semiconductor device. The image detection sensor 22 is connected with a decoder 23 while the decoder 23 is connected to the controller.

In the hologram reproducing apparatus 16a, when reproducing signal information recorded on the hologram recording medium, an irradiation process is performed to irradiate the light beam 17 from the laser light source LD to the recording medium region of the hologram recording medium (not shown) through the shutter SHs, the beam expander BX and the first objective lens 18a. In the irradiation process, a reproduced light beam (0-order light and reproduced diffraction light) corresponding to the diffraction grating is produced from the recording medium region to which a reference light beam has been irradiated.

The reproduced light beam is guided to the first inverse Fourier transform lens 20a and the second objective lens 18b. Furthermore, in the second objective lens 18b, light collecting process is performed to collect the beam to a focal point. The reproduced light beam collected in the light collecting process, at the convergent point, is irradiated to an incident-light processing unit 21.

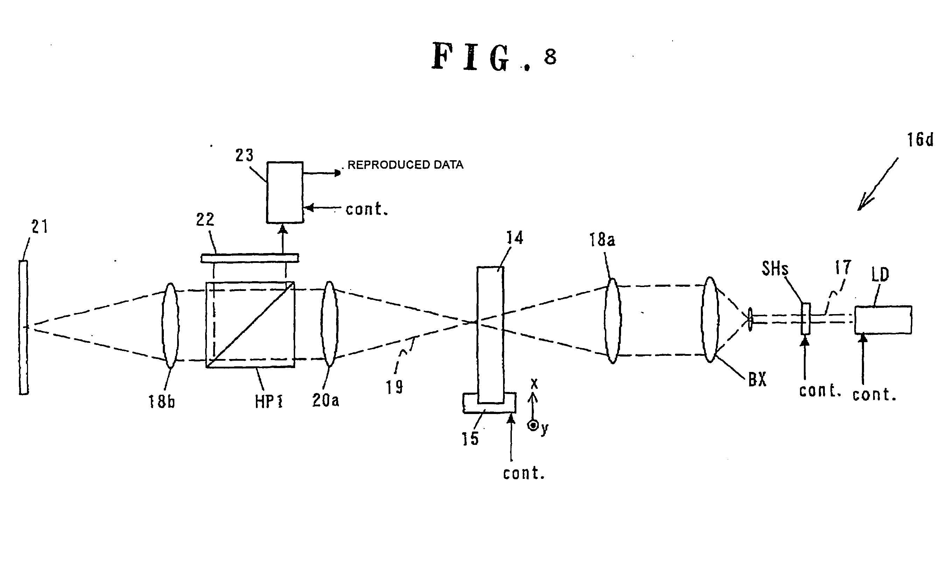

After the light collecting process, an incident-light handling process is performed for separation of 0-order light and diffraction light of the reproduced light beam by use of the incident-light processing unit 21. Figs. 5(a) and 5(b) show the reproducing operation of a transmission-type incident-light processing unit formed of a photosensitive material having a characteristic value that the transmittance during irradiation is lower than the transmittance in the absence of irradiation (characteristic value that the transmittance in the absence of irradiation is higher than the transmittance in the presence of irradiation).

In the incident-light processing unit before irradiated with a reproduced light beam (Fig. 5(a)), the incident-light processing unit 21 has a transmittance uniformly high.

In the incident-light processing unit 21 at a convergent point of the reproduced-light beam (0-order light and diffraction light) converged by the second objective lens 18b serving as a Fourier transform lens, the reproduced light beam is decomposed as Fourier component. A non-modulated component of the reproduced light beam, i.e. reference light (component), is a Fourier 0-order component and hence converged at a center area R1 (Fig. 5(b)) of the incident-light processing unit 21, to form an area higher in light intensity. On the other hand, a modulated component of the reproduced light beam is distributed outer of the center area R1 on the incident-light processing unit 21, thus having a light intensity not so high. In case a threshold TH at which the transmittance through the incident-light processing unit 21 decreases is set between the light intensity at the R1 area and the light intensity at its periphery, the non-modulated component, i.e. reference light, only can be decreased. After the incident-light handling process as above, the diffraction light of the reproduced light beam transmitted the incident-light processing unit is guided to the image detection sensor 22 through the second inverse Fourier transform lens 20b shown in Fig. 4, thus effecting a reproducing process to reproduce signal information. The image detection sensor 22 receives a dot-pattern image based on the diffraction light of reproduced light beam and converts it into an electric digital data signal. By delivering it to the decoder 23, the former record data is reproduced.

As described above, the action of the incident-light processing unit 21 makes it possible to decrease the light intensity of the 0-order light not needed in the reproduction at the image detection sensor 22, thus making it easy to detect reproduction information.

In this embodiment, the incident-light processing unit used a photosensitive material having a characteristic value the transmittance in the absence of irradiation is higher than the transmittance in the absence of irradiation. However, it is apparently possible to use a material that the photosensitive material is transmissive to light and increased in at least one of reflectance and absorptance during irradiation as compared to that in the absence of irradiation.

### <Example 2A>

Although example 1 showed the hologram reproducing apparatus applied to a hologram recording medium in a form to transmit the entering light (hereinafter, referred to as a transmission type hologram recording medium), this is not limitative but equivalent effect is to be exhibited also in a hologram reproducing apparatus applied to a hologram recording medium in a form to reflect the entering light (hereinafter, referred to as a reflection type hologram recording medium).

As shown in Fig. 6, a hologram reproducing apparatus 16b applicable to a reflection type hologram recording medium is arranged on the same optical axis with a laser light source LD for emitting a coherent light beam, and a light-beam irradiator having a shutter SHs, a beam expander BX, a first half-mirror prism HP1 and a first objective lens 18a.

The shutter SHs is under control of the controller, to control the passage time of the light beam traveling from the laser light source LD. The beam expander BX expands the diameter of a light beam 17 passed the shutter SHs into a collimated light ray. The first half-mirror prism HP1 transmits the light beam traveling from the laser light source LD and projects the light beam to the first objective lens 18a.

The first objective lens 18a collects the light beam into a reference light beam. A hologram recording medium 14 is arranged at a convergent position of the reference light beam. The hologram recording medium 14 has a recording medium region (not shown) having signal information recorded as a diffraction grating region and a reflective region (not shown) that formed of a light-reflective material. Furthermore, this is mounted on a movable stage 15 as a support to move the medium.

By irradiated with a reference light beam, the recording medium region generates a reproduced light beam (0-order light and diffraction light) corresponding to the region of diffraction grating. The reproduced light beam is reflected by the reflective region provided at a side opposite to the incident side of the reference light beam, to travel in a direction reverse to the incident direction of the reference light beam. The reproduced light beam is guided to the first objective lens 18a and the first half-mirror prism HP1. At this time, the first objective lens 18a serves as an inverse Fourier transform lens for the reproduced light beam.

The first half-mirror prism HP1 reflects the reproduced light beam perpendicularly, i.e. vertically to the traveling direction of the reproduce light beam, thereby separating it off the light path of reference light beam. The reproduced light beam is again gathered by a second objective lens 18b. As mentioned above, the first objective lens 18a, the first half-mirror prism HP1 and the second objective lens 18b constitute a reproduced light guide, commonly using the first objective lens 18a and the first half-mirror prism HP1 constituting the light beam irradiator.

A transmission-type incident-light processing unit 21 is arranged at a focal point of the second objective lens 18b, while a first inverse Fourier transform lens 20a and an image detection sensor 22 are arranged in order on the path of the light transmitted the incident-light processing unit 21. The first inverse Fourier transform lens 20a is arranged coaxial to the second objective lens 18b. The image detection sensor 22 is arranged at a focal length point of the first inverse Fourier transform lens 20a, to receive the light inverse-Fourier-transformed by the first inverse Fourier transform lens. The image detection sensor 22 is connected with a decoder 23 while the decoder 23 is connected to the controller.

In a signal information data reproducing method on the hologram reproducing apparatus 16b structured as above, there is included a irradiation process to first irradiate the light beam traveling from the laser light source LD to the hologram recording medium 14 through the shutter SHs, the beam expander BX, the first half-mirror prism HP1 and the first objective lens 18a. In the irradiation process, a reproduced light beam corresponding to the diffraction grating recorded on the recording medium (0-order light and reproduced diffraction light) is generated from the hologram recording medium irradiating with the reference light. The reproduced light beam is reflected at the reflective region (not shown) that provided at a side opposite to the incident side of the reflection beam of hologram recording medium 14.

After the irradiation process, the reproduced light beam is lead to the first objective lens 18a and guided to the first half-mirror prism HP1. The first half-mirror prism HP1 reflects the reproduced light beam toward the vertical direction. The reproduced light beam is collected by the second objective lens 18b to the transmission-type incident-light processing unit 21, thus effecting a light collecting process.

The transmission-type incident-light processing unit 21 transmits the diffraction light while cutting off the 0-oder light by reducing the transmittance in the area where the 0-order light of reproduced light is being irradiated, thus effecting an incident-light handling process for separating the 0-order light and the diffraction light apart. The diffraction light of reproduced light separated from the 0-order light is guided to the image detection sensor 22 through the first inverse Fourier transform lens 20a. The image detection sensor 22 receives a dot-pattern image based on the diffraction light of reproduced light beam and reconverts it into an electric digital data signal. Then, when it is sent to the decoder 23, the former data is reproduced.

### <Example 2B>

A hologram reproducing apparatus in example 2B is the same structure as the foregoing example 2A except for the following point. Namely, it is different from the hologram reproducing apparatus 16b of Fig. 6 that the first half-mirror prism HP1 is replaced with a polarization beam splitter PBS and a 1/4-wavelength plate λ/4 is provided between the polarization beam splitter PBS and the first objective lens 18a, as shown in Fig. 7. Reproduction process is the same.

By providing a separator for separating the reproduced light beam out of the optical path of reference light beam having the polarization beam splitter PBS and the 1/4-wavelength plate λ/4, the utilization efficiency of light beam is improved.

### <Example 3A>

Although examples 1, 2A and 2B showed hologram reproducing apparatuses using transmission-type incident-light processing units, the hologram reproducing apparatus of the invention is not limited to those but may use a reflection-type of incident-light processing unit having a reflectance of the incident-light processing unit lowered as compared to that in the absence of irradiation at a high intensity point of incident light beam.

For example, the hologram reproducing apparatus 16d shown in Fig. 8 is arranged, on the same optical path, with a laser light source LD for emitting a coherent light beam, a shutter SHs, a light beam irradiator formed by a beam expander BX and a first objective lens 18a, and a transmission-type of hologram recording medium 14, that are similar to the hologram reproducing apparatus 16a explained in example 1. Furthermore, on the optical path, there are arranged a first inverse Fourier transform lens 20a, a first half-mirror prism HP1, a second objective lens 18b and a reflection-type incident-light processing unit 21. The first inverse Fourier transform lens 20a is arranged coaxial to the first objective lens 18a.

The half-mirror prism HP1 is arranged to transmit the light beam traveling from the first inverse Fourier lens 20a and to reflect vertically the light beam traveling from the second objective lens 18b. An image detection sensor 22 is arranged to receive the light reflected by the first half-mirror prism HP1. The image detection sensor 22 is connected to a decoder 23 while the decoder 23 is connected to the controller.

The reflection-type incident-light processing unit 21 is arranged at a light collecting position to which light is collected by the second objective lens 18b, and includes an optical element formed of a photosensitive material that at least one of characteristic values of reflectance, absorptance and transmittance change(s) depending upon a light intensity of incident light beam. The photosensitive material uses a photosensitive reflective material having a characteristic value that the reflectance upon light beam irradiation is lower than the reflectance in the absence of irradiation thereof.

The photosensitive reflective material may include a phase-change material, a semiconductor fine-particle material, an inverse photochromic material, or thermochromic material.

The phase-change material is usually (in the absence of irradiation or in the presence of irradiation of less than a predetermined light intensity) opaque. However, phase change takes place into transparent in a region where temperature is high at a light beam center and a constant temperature is exceeded. When the temperature lowers, phase change again occurs returning into the former opaque state. For example, antimony may use as the phase-change material.

The semiconductor fine-particle material is usually (in the absence of irradiation or in the presence of irradiation of less than a predetermined light intensity) opaque. It however becomes transparent in a region where temperature is high at a light beam center and a constant temperature is exceeded. When the temperature lowers, the former opaque state is returned.

The inverse photochromic material is usually (in the absence of irradiation or in the presence of irradiation of less than a predetermined light intensity) opaque. It however changes into an unstable transparent state by absorbing an irradiation light beam (at center section with high intensity). When the light beam weakens in intensity, the former opaque state is returned.

Some of the thermochromic materials are usually (in the absence of irradiation or in the presence of irradiation of less than a predetermined light intensity) opaque. It however changes into transparent only in a region where temperature is high at a light beam center and a constant temperature is exceeded. When the temperature lowers, the former opaque state is returned.

The incident-light processing unit 21 including such a photosensitive reflective material is reduced in light-beam reflection intensity by making the transmittance of incident-light processing unit R higher than the usual at a point high in incident-light beam intensity. The use of such action allows the reflection-type incident-light processing unit to contribute to a separation of reproduced light beam into 0-order light and diffraction light.

In the hologram reproducing apparatus 16d as above, the method of reproducing the information data recorded on the hologram recording medium includes an irradiation process of irradiating the light beam 17 traveling from the laser light source LD to the recording medium region (not shown) of the hologram recording medium 14 through the shutter SHs, the beam expander BX and the first objective lens 18a. From the hologram recording medium irradiated with a reference light beam, a reproduced light beam 19 is generated and derived corresponding to the recorded diffraction grating.

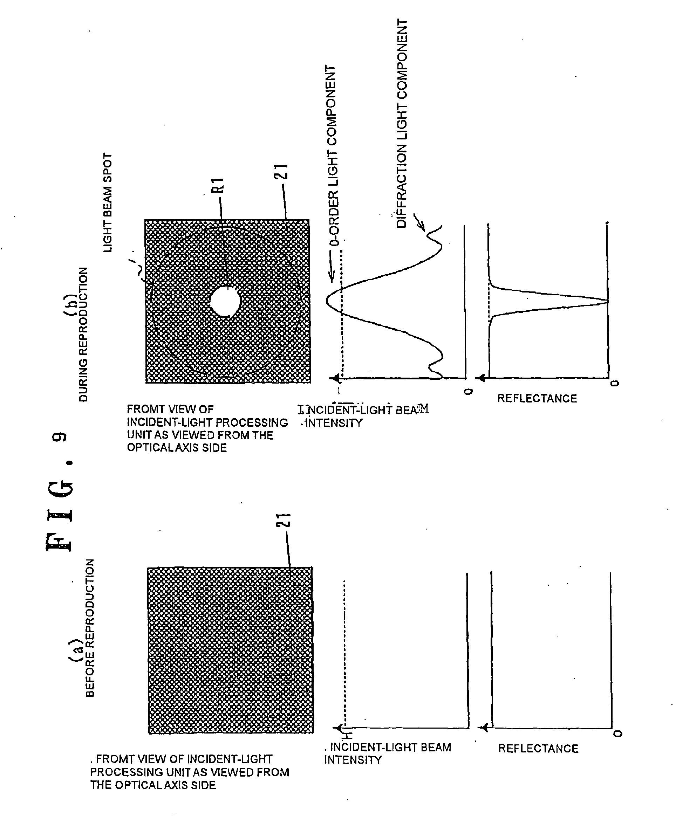

The reproduced light beam 19 is guided to the first inverse Fourier transform lens 20a where it is inverse-Fourier-transformed, and transmitted through the first half-mirror prism HP1, followed by performing a focusing process to irradiate the incident-light processing unit 21 through light collection by means of the second objective lens 18b. After light collecting process, an incident-light handling process is performed to separate 0-order light and diffraction light of the reproduced light beam by using the incident-light processing unit 21. There is shown, in Figs. 9(a) and 9(b), a photosensitive-material-based operation in reproduction of the reflection-type of incident-light processing unit formed of a photosensitive material having a characteristic value that the transmittance of upon irradiating a light beam is lower than the transmittance of upon not irradiating a light beam (characteristic value that the reflectance in the absence of irradiation is higher than the reflectance in the presence of irradiation).

In the incident-light processing unit 21 prior to irradiating a reproduced light beam (Fig. 9(a)), the incident-light processing unit 21 has a reflectance uniformly high. In a region of incident-light processing unit 21 located at a convergent point of the reproduced light beam (0-order light and diffraction light) converged by the second objective lens 18b, the reproduced light beam is separated as a Fourier component. The reproduced light beam has an unmodulated component, i.e. reference light (component), converging to a center area R1 of the incident-light processing unit 21, thereby forming an area high in light intensity. The reproduced light beam has a modulated component distributing outer of the center area R1 of the incident-light processing unit 21 where light intensity is not so high. In case a threshold TH at which the reflectance of the incident-light processing unit 21 decreases is set up between the light intensity at the area R1 and the light intensity at the periphery, it is possible to decrease only the unmodulated component, i.e. reference light. In this manner, the diffraction light solely is reflected and guided to the image detection sensor 22 through the second objective lens 18b and the first half-mirror prism HP1. At this time, the second objective lens 18b serves as an inverse Fourier transform lens. The image detection sensor 22 receives a dot-pattern image based on the diffraction light of reproduced light beam and reconverts it into an electric digital data signal. Thereafter, when it is delivered to the decoder 23, the former data is reproduced. The above operation of the incident-light processing unit 21 can decrease the intensity of the 0-order light of reproduced light not required in the reproduction in the image detection sensor 22, thus facilitating to detect reproduced information.

Although this example used, in the incident-light processing unit, a photosensitive material having a characteristic value that the reflectance in the absence of irradiation is higher than the reflectance in the presence of irradiation, it is apparently possible to use a material that the photosensitive material is reflective and wherein at least one of transmittance and absorptance increases during irradiation as compared to that in the absence of irradiation.

### <Example 3B>

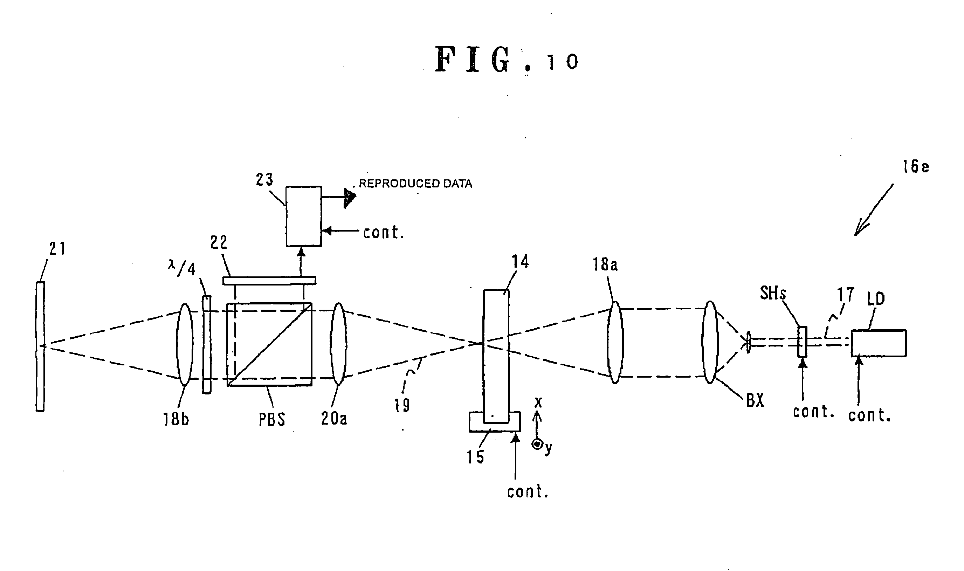

A hologram reproducing apparatus in example 3B is the same structure as the foregoing example 3A except for the following point. Namely, it is different from the hologram reproducing apparatus 16d of Fig. 8 that the first half-mirror prism HP1 is replaced with a polarization beam splitter PBS and a 1/4-wavelength plate λ/4 is provided between the polarization beam splitter PBS and the second objective lens 18b, as shown in Fig. 10. Reproduction process is the same.

By providing a separator for separating the diffracted light of reproduced light beam from the optical path of reference light beam having the light beam splitter PBS and the 1/4-wavelength plate λ/4, the utilization efficiency of light beam is improved.

### < Example 4A>

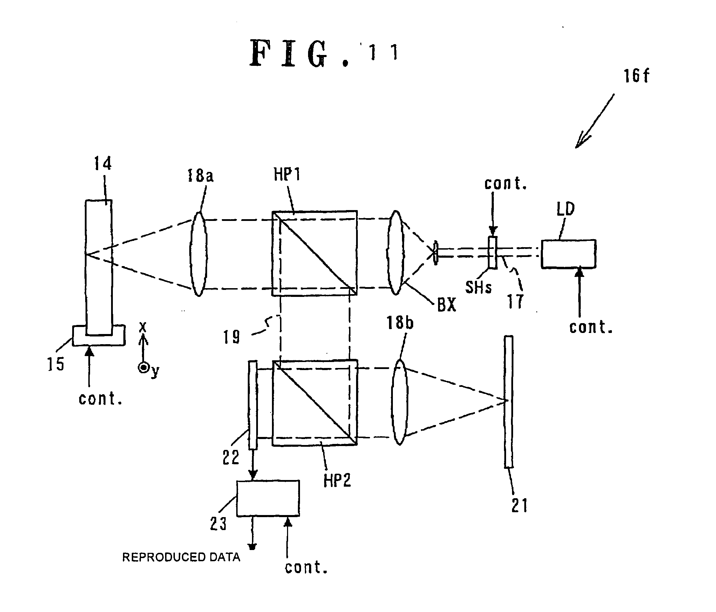

There is a hologram reproducing apparatus 16f as shown in Fig. 11, as an example of hologram reproducing apparatus structured by using a reflection-type of hologram recording medium and a reflection-type of incident-light processing unit.

The hologram reproducing apparatus 16f is arranged, on the same optical path, with a laser light source LD for emitting a coherent light beam, a light beam irradiator having a shutter SHs, a beam expander BX, a first half-mirror prism HP1 and a first objective lens 18a, and a reflection-type of hologram recording medium 14, that are similar to the hologram reproducing apparatus 16b explained in example 2A. The hologram reproducing apparatus 16f is provided with a reproduced light guide including a second half-mirror prism HP2 for further vertically reflecting the reproduced light beam reflected vertically to the optical axis by the first half-mirror prism HP1. The reproduced light guide includes a second objective lens 18b for collecting the reproduced light reflected by the second half-mirror prism HP2, a reflection-type incident-light processing unit 21 arranged at a point collected by the second objective lens 18b, and an image detection sensor 22 for receiving the diffraction light of reproduced light beam reflected by the reflection-type incident-light processing unit 21. In the reproduced light guide, the diffraction light of reproduced light is transmitted through the second objective lens 18b and the second half-mirror prism HP2, and received by the image detection sensor 22.

In the hologram reproducing apparatus 16f as above, the method of reproducing the information data recorded on the hologram recording medium 14 includes an irradiation process of irradiating the light beam traveling from the laser light source LD to the reflection-type of hologram recording medium 14 through the shutter SHs, the beam expander BX, the first half-mirror prism HP1 and the first objective lens 18a. By irradiated with a reference light beam, the hologram recording medium 14 generates a reproduced light beam (reference light and reproduced diffraction light) corresponding to the recorded diffraction grating. The reproduced light beam is derived in a traveling direction reverse to an incident traveling direction of the reference light beam. The reproduced light beam is guided to the first objective lens 18a and the first half-mirror prism HP1, and reflected vertically by the half-mirror prism HP1. The reproduced light beam reflected is caused to enter the second half-mirror prism HP2, and further reflected vertically to the incident direction by the second half-mirror prism HP2. The reproduced light beam is collected by the second objective lens 18b. The transmission-type incident-light processing unit 21 arranged at the focal point reflects the diffraction light while reducing the reflectance in the area where the 0-order light of reproduced light is being irradiated and transmitting or absorbing the 0-order light, thus effecting an incident-light handling process for separating the 0-order light and the diffraction light apart. The reflected diffraction light is guided to the image detection sensor 22 through the second objective lens 18b and the second half-mirror prism HP2. The image detection sensor 22 receives a dot-pattern image based on the diffraction light of reproduced light beam and reconverts it into an electric digital data signal. Then, when it is sent to the decoder 23, the former data is reproduced.

### <Example 4B>

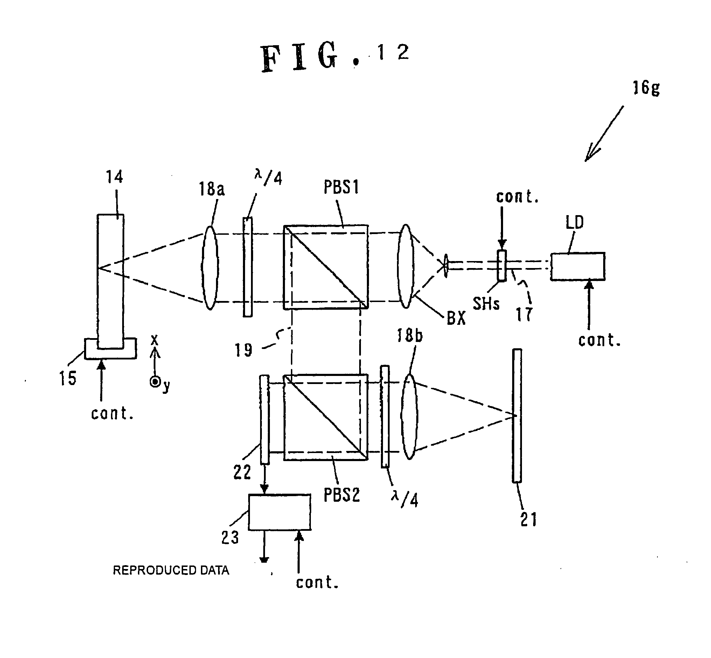

A hologram reproducing apparatus in example 4B is the same structure as the foregoing hologram reproducing apparatus in example 4A except for the following point. Namely, it is different from the hologram reproducing apparatus 16f of Fig. 11 that the first half-mirror prism HP1 is replaced with a first polarization beam splitter PBS1 and a 1/4-wavelength plate λ/4 is provided between the first polarization beam splitter PBS1 and the first objective lens 18a, and that the second half-mirror prism HP2 is replaced with a second polarization beam splitter PBS2 and a 1/4-wavelength plate λ/4 is provided between the second polarization beam splitter PBS2 and the second objective lens 18b, as shown in Fig. 12. Reproduction process is the same.

By providing the polarization beam splitter PBS and the 1/4-wavelength plate on the optical path of reproduced light beam, the utilization efficiency of light beam is improved to raise the intensity of the diffraction light of reproduced light beam at the image detection sensor.

In any of the example shown in examples 1 to 4B, the incident-light processing unit in a high-light-beam-intensity region operates to lower the transmittance for the case of transmission type and to lower the reflectance for the case of reflection type. The 0-order light and the diffraction light of a reproduced light beam, due to reproduction with a signal corresponding to the signal information on the hologram recording medium, is irradiated to the incident-light processing unit. At this time, because the 0-order light and the diffraction light of the reproduced light beam have a difference of light intensity, i.e. because light intensity is greater in the 0-order light than in the diffraction light, the incident-light processing unit acts differently for between the 0-order light and the diffraction light.

In the case of a transmission-type of incident-light processing unit (examples 1, 2A and 2B),in the incident-light processing unit, the range being irradiated with the 0-order light lowers in transmittance to thereby lower the intensity of the light reaching the lens for inverse Fourier transform. On the other hand, because the range irradiated with the diffraction light remains high in transmittance, the diffraction light can be led to the lens for inverse Fourier transform with almost no attenuation.

In the case of a reflection-type of incident-light processing unit (examples 3A, 3B, 4A and 4B), in the incident-light processing unit, the range being irradiated with the 0-order light lowers in reflectance, thereby lower the intensity of the light reaching the lens for inverse Fourier transform. On the other hand, because the range irradiated with the diffraction light remains high in reflectance, the diffraction light can be led to the lens for inverse Fourier transform with almost no attenuation.

The function of the incident-light processing unit makes it possible to reduce the intensity of the reference light not required for reproduction at the image detection sensor, thus making it easy to detect reproduced information. Furthermore, because there is no region predefined on the incident-light processing unit, there is no need for microstructure fabrication. In addition, it is possible to reduce the noise in the reproduced signal due to diffraction or scatter at the interface.

### <Example 5A>

In place of the incident-light processing unit in the foregoing example, an incident-light processing unit having a reflective area for reflecting the 0-order light of reproduced light beam may use.

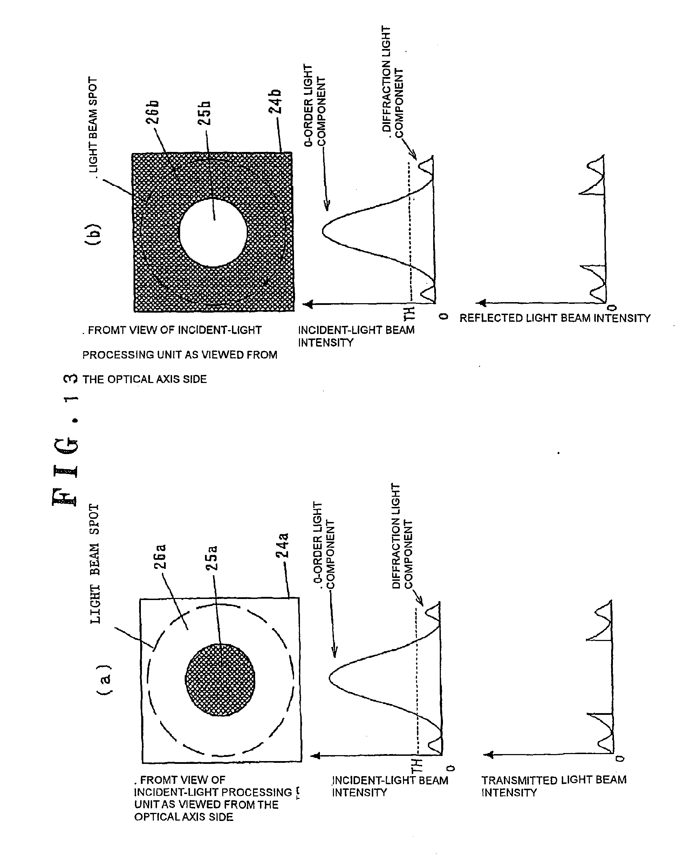

For example, as shown in Fig. 13(a), an incident-light processing unit 24a includes a circular reflective area 25a formed of a light-reflective material to reflect light, and a transmissive area 26a formed of a light-transmissive material to transmit light formed around the reflective area. The position and the size of reflective area 25a are determined by using a light intensity distribution of Fourier-transformed reproduced light. The reflective area 25a corresponds to a size to reflect a predetermined light intensity or more of 0-order light but not to be irradiated by diffraction light. The incident-light processing unit 24a thus structured is referred to as a 0-order-light-reflection type of incident-light processing unit.

The reflective area 25a is not limited circular in form but may be made rectangular, triangular, pentagonal, hexagonal, or octagonal for example.

The hologram reproducing apparatus having a 0-order-light-reflection type of incident-light processing unit preferably has means for performing an optical axis alignment (in-plane direction vertical to the optical axis) to make coincident the center of the reflective area of incident-light processing unit and the optical axis of the reproduced light beam collected to and incident upon the incident-light processing unit, and a focusing (in a direction parallel with the optical axis) to collect the 0-order light to the center of the reflective area. Namely, because the reproduced light beam has a light intensity of 0-order light greater at around the optical axis of the 0-order light of reproduced light beam, the record data contained in the diffraction light is made easy to detect by reflecting the 0-order light at and around the optical axis and separating it from the reproduced-light diffraction light.

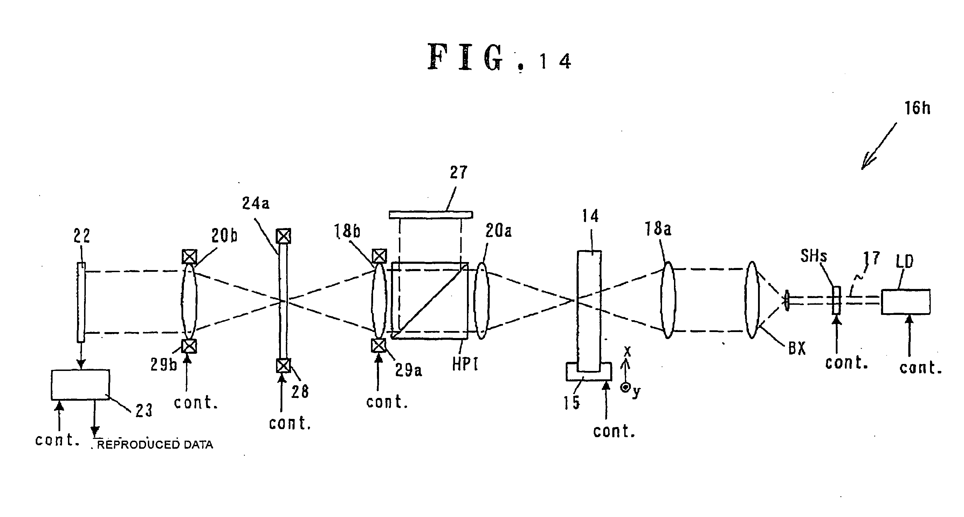

There is shown in Fig. 14 an example of hologram reproducing apparatus having a 0-order-reflection type of incident-light processing unit. A hologram reproducing apparatus 16h has a structure nearly similar to the hologram reproducing apparatus 16a shown in example 1 except for the following point. Namely, this is different from the hologram reproducing apparatus 16a of Fig. 4 in that the transmission-type of incident-light processing unit 21 is replaced with a 0-order-reflection-type of incident-light processing unit 24a and wherein, between the first inverse Fourier transform lens 20a and the second objective lens 18b, there are provided a first half-mirror prism HP1 for transmitting the light entering from the first inverse Fourier transform lens 20a and reflecting vertically the light entering from the second objective lens 18b, a detector 27 for receiving the light reflected by the first half-mirror prism HP1, a first driver 28 for moving the incident-light processing unit depending upon a detection signal from the detector 27, and a second drivers 29a, 29b for moving the first objective lens 18b and the second inverse Fourier transform lens 20b depending upon a detection signal from the detector 27.

The detector 27 is structured by an array of charge coupled devices CCDs or complementary metal-film semiconductor devices, to supply a detection signal to a detection-signal processing circuit of the controller (not shown).

The first and second drivers 28, 29a, 29b are connected to the controller. By receiving a drive signal corresponding to the detection signal from the controller, the first driver 28 moves the incident-light processing unit 24 and the second drivers 29a, 29b drives the second objective lens 18b and the second inverse Fourier transform lens 20b respectively, in accordance with the drive signal.

The detector 27 and the first and second drivers 28, 29a, 29b constitute a servo mechanism. The first driver 28 moves the incident-light processing unit 24a while the second drivers 29a, 29b moves the second objective lens 18b and the second inverse Fourier transform lens 20b, in a manner to maximize the intensity of the 0-order light to be reflected by the incident-light processing unit and received by the detector 27, i.e. to align between the optical axis of the 0-order light of reproduced light beam and the center of the reflection region (not shown) of incident-light processing unit.

The signal information data reproducing method on the hologram reproducing apparatus 16h structured above includes an irradiation process to irradiate the light beam traveling from the laser light source LD to the hologram recording medium 14 through the shutter SHs, the beam expander BX and the first objective lens 18a. From the hologram recording medium 14 irradiated by the reference light beam, a reproduced light beam (0-order light and reproduced diffraction light) corresponding to the diffraction grating recorded in the recording medium region (not shown) of the hologram recording medium is generated. After generating the reproduced light beam, a light collecting process is effected that the reproduced light beam is guided to the first inverse Fourier transform lens 20a where it is inverse-Fourier-transformed, and transmitted through the first half-mirror prism HP1 and focused by the second objective lens 18b to a focal point. After the light collecting process, an incident-light process is effected that the reproduced light beam collected is irradiated to the incident-light processing unit 24a where the 0-order light of reproduced light beam is reflected upon a reflection region (not shown) of the incident-light processing unit 24a while the diffraction light of reproduced light beam is transmitted through a transmission region (not shown) of the incident-light processing unit 24a.

The 0-order light reflected by the reflection region of the incident-light processing unit 24a is guided to the second objective lens 18b and the first half-mirror prism HP1 in order, and reflected upon the first half-mirror prism HP1 vertically to the optical axis of the reproduced light beam. The reflected 0-order light enters the detector 27 where it detects the intensity of the 0-order light. The first and second drivers 28, 29a, 29b are placed under control to maximize the intensity of the 0-order light by the servo mechanism, thereby positioning the incident-light processing unit 24a.

After positioning the incident-light processing unit 24a, the second objective lens 18b and the second inverse Fourier transform lens 20b, the diffraction light of reproduced light beam transmitted the transmissive area of incident-light processing unit 24a enters the image detection sensor 22. The image detection sensor 22 receives a dot-pattern image based on the diffraction light of reproduced light beam and converts it into an electric digital data signal. When it is sent to the decoder 23, the former data is reproduced.

### <Example 5B>

The alignment between the center of the reflective area of incident-light processing unit and the axis of 0-order light of reproduced light may be by detecting a position of the reproduced light beam entering the incident-light processing unit.

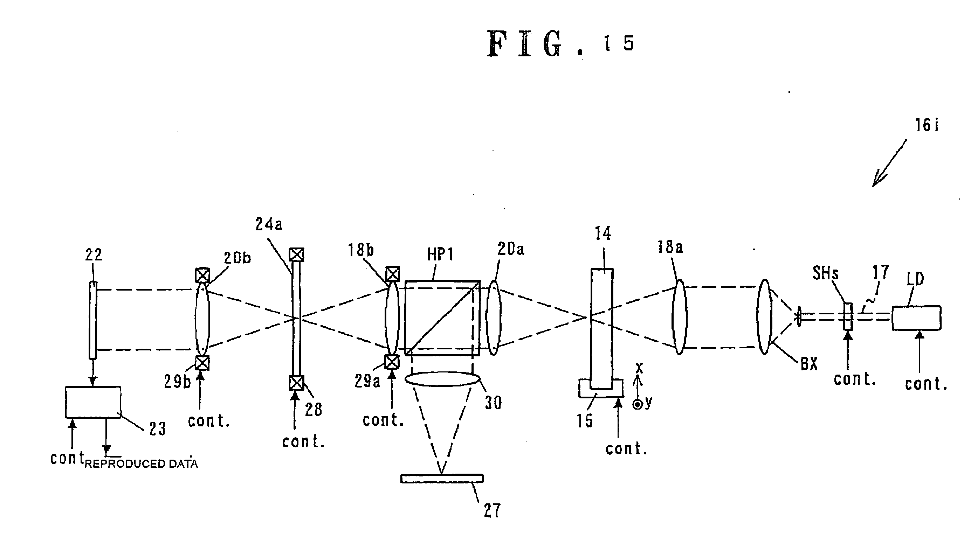

For example, as shown in Fig. 15, the hologram reproducing apparatus 16i has nearly the same structure as the hologram reproducing apparatus 16h shown in example 5A, except for the following point. Namely, this is different from the hologram reproducing apparatus 16h shown in Fig. 14 in that omitted is the detector 27 for detecting the light entered toward the first half-mirror prism HP1 from a second objective lens 18b side and reflected vertically, to provide a lens 30 for collecting the light entered toward the first half-mirror prism HP1 from a first inverse Fourier transform lens 20b side and reflected vertically and a detector 27 for detecting the collected light. The detector 27 is made up by a four-division detector for use on a pickup of optical disk, to supply a detection signal to a detection-signal processing circuit of the controller (not shown).

The first and second drivers 28, 29a, 29b are connected to the controller. Receiving a drive signal corresponding to the detection signal from the controller, the first driver 28 causes the incident-light processing unit 24a to move while the second driver 29a, 29b cause the second objective lens 18b and the second inverse Fourier transform lens 20b to move respectively, according to the drive signal.

The detector 27, the first and second drivers 28, 29a, 29b constitute a servo mechanism, wherein such means as astigmatism technique is utilized in detecting a reproduced light beam position. This enables to position the incident-light processing unit 24b.

The signal information data reproducing method on the hologram reproducing apparatus 16i constructed above includes a process to irradiate the light beam traveling from the laser light source LD to the hologram recording medium 14 through the shutter SHs, the beam expander BX and the first objective lens 18a. By irradiating the reference light beam to the hologram recording medium 14, a reproduced light beam (0-order light and reproduced diffraction light) corresponding to the diffraction grating recorded on the hologram recording medium 14 is generated. The reproduced light beam is guided to the first inverse Fourier transform lens 20a where it is inverse-Fourier-transformed and then irradiated to the first half-mirror prism HP1. The first half-mirror prism HP1 separates the entering reproduced light beam into a component reflected vertical to the optical axis of incident light and a component transmitted along the optical axis.

The vertically reflected component of reproduced light beam is received by the detector 27 through the lens 30. The position of the reproduced light beam is detected depending upon a detection signal traveling from the detector 27. Depending upon a position of the reproduced light beam, the incident-light processing unit 24a is positioned by the first driver 28 and the second objective lens 18b and second inverse Fourier transform lens 20b are positioned by the second drivers 29a, 29b, respectively.

The reproduced light beam component transmitted the first half-mirror prism HP1 along the optical axis thereof is focused by the second objective lens 18b positioned. The reproduced light beam collected is irradiated to the incident-light processing unit 24a where the 0-order light of reproduced light beam is reflected by the reflective area (not shown) of the incident-light processing unit 24a while the diffraction light of reproduced light beam transmits through the transmissive area (not shown) of the incident-light processing unit 24a. Namely, the 0-order light and the diffraction light of the reproduced light beam is separated by the incident-light processing unit 24a positioned in the above manner.

The diffraction light of reproduced light beam transmitted the transmissive area of the incident-light processing unit 24a enters the image detection sensor 22 through the second inverse Fourier transform lens 20b positioned. The image detection sensor 22 receives a dot-pattern image based on the diffraction light of reproduced light beam and converts it into an electric digital data signal. When it is delivered to the decoder 23, the former data is reproduced.

### <Example 6A>

In place of the incident-light processing unit having the reflective area for reflecting the 0-order light explained in examples 5A and 5B, an incident-light processing unit having a transmissive area for transmitting the 0-order light of reproduced light beam may be used.

For example, as shown in Fig. 13(b), an incident-light processing unit 24b includes a circular transmissive area 25b formed of a light-transmissive material to transmit light, and a reflective area 26b formed of a reflective material to reflect light and formed around the transmissive area. The incident-light processing unit 24b thus structured is hereinafter referred to as a 0-order-light-transmission type of incident-light processing unit.

The transmissive area 25b of the 0-order-light-transmission-type of incident-light processing unit 24b has a position and a size to be determined by use of the distribution in intensity of the Fourier-transformed reproduced light, similarly to that of the reflective area 25a of reflection-type of incident-light processing unit 24a explained in example 5A. The shape of transmissive area 25b is not limited to the circular in form but may be made rectangular, triangular, pentagonal, hexagonal or octagonal, for example.

The hologram reproducing apparatus having a 0-order-light-transmission type of incident-light processing unit preferably has means for performing an optical axis alignment (in-plane direction vertical to the optical axis) to make coincident the center of the transmissive area of incident-light processing unit and the optical axis of the reproduced light beam collected to and incident upon the incident-light processing unit, and a focusing (in a direction parallel with the optical axis) to collect the 0-order light to the center of the transmissive area.

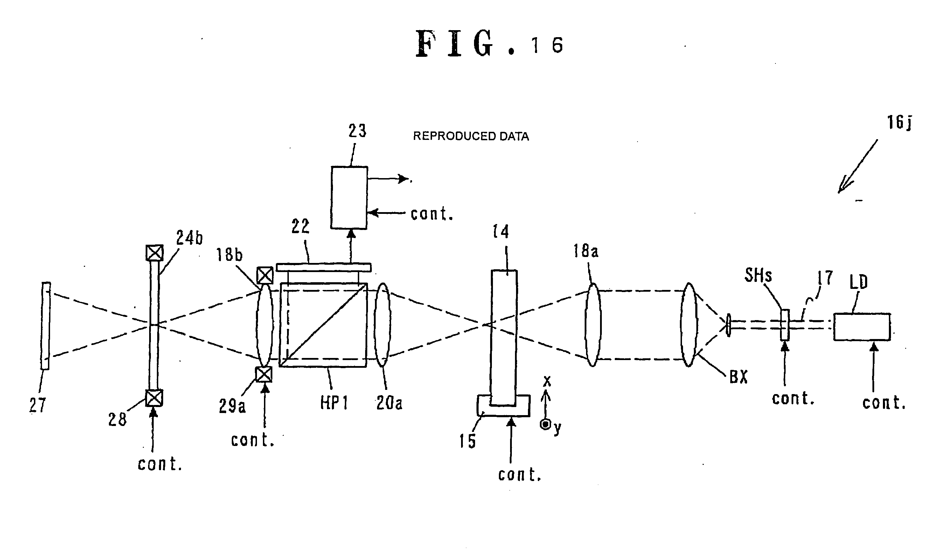

There is shown in Fig. 16 an example of hologram reproducing apparatus having a 0-order-light-transmission type of incident-light processing unit. The hologram apparatus 16j has nearly the same structure as the hologram reproducing apparatus 16h described in the above example 5A. Namely, this is different from the hologram reproducing apparatus 16h in that the 0-order-light-reflection type of incident-light processing unit 24a is replaced with a 0-order-light-transmission type of incident-light processing unit 24b to thereby omit the second inverse Fourier transform lens 20b and form an image detection sensor 22 and a detector 27 in a replaced fashion.

The detector 27, the first and second drivers 28, 29a provided in the hologram reproducing apparatus 16j constitute a servo mechanism. The first driver 28 causes the incident-light processing unit 24b to move while the second driver 29a causes the second objective lens 18b to move, in a manner to maximize the intensity of the 0-order light to be received by the detector 27, i.e. in a manner to align together the optical axis of the 0-order light of reproduced light and the center of the transmissive area.

In a signal information data reproducing method on the hologram reproducing apparatus 16j structured as above, included is an irradiation process to irradiate the light beam traveling from the laser light source LD to the hologram recording medium 14 through the shutter SHs, the beam expander BX and the first objective lens 18a. From the hologram recording medium 14 irradiated with the reference light beam, generated is a reproduced light beam (0-order light and reproduced diffraction light) corresponding to the diffraction grating recorded on the recording medium region (not shown) of the hologram recording medium. The reproduced light beam is guided to the first inverse Fourier transform lens 20a where it is inverse-Fourier-transformed, and transmitted through the first half-mirror prism HP1 and collected by the second objective lens 18b, thus effecting a focusing process. The reproduced light beam thus collected is irradiated to the incident-light processing unit 24b. The 0-order light of reproduced light beam transmits through the transmissive area (not shown) of incident-light processing unit 24b while the diffraction light of reproduced light beam is reflected by the reflective area (not shown) of incident-light processing unit 24b.

The 0-order light transmitted through the transmissive area of incident-light processing unit 24b enters the detector 27 where the 0-order light is detected for position. The first and second drivers 28, 29a are placed under control of the servo mechanism, to maximize the intensity of the 0-order light, thereby positioning the incident-light processing unit 24b and second objective lens 18b.

The diffraction light of reproduced light beam, reflected by the reflective area of incident-light processing unit 24b, is guided from the positioned second objective lens 18b to the first half-mirror prism HP1. At the first half-mirror prism HP1, it is reflected vertically to the traveling direction of reproduced light beam. The reflected diffraction light enters the image detection sensor 22. The image detection sensor 22 receives a dot-pattern image based on the diffraction light of reproduced light beam and reconverts it into an electric digital data signal. Then, when it is sent to the decoder 23, the former data is reproduced.

### <Example 6B>

The alignment between the center of the reflective area of incident-light processing unit and the axis of 0-order light of reproduced light may be by detecting a position of the reproduced light beam entering the incident-light processing unit.

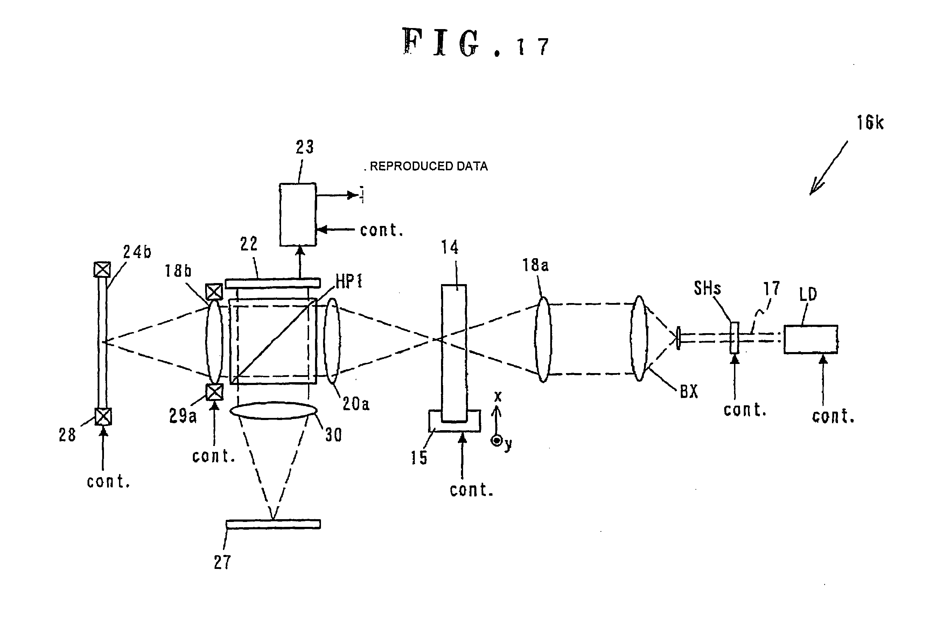

For example, as shown in Fig. 17, the hologram reproducing apparatus 16k has nearly the same structure as the hologram reproducing apparatus 16i shown in example 5B, except for the following point. Namely, this is different from the hologram reproducing apparatus 16i shown in Fig. 15 in that the second inverse Fourier transform lens 20b is omitted to change the position of the image detection sensor 22 from an extension of an optical path connecting between the second objective lens 18b and the incident-light processing unit 24a onto an optical path of vertical reflection of the light entered toward the first half-mirror prism HP1 from a second objective lens 18b side. The detector 27 is made up by a four-division detector for use on a pickup for an optical disk, to supply a detection signal to a detection-signal processing circuit of the controller.

The first and second drivers 28, 29a are connected to the controller. Receiving a drive signal corresponding to the detection signal from the controller, the first driver 28 causes the incident-light processing unit 24b to move while the second driver 29a cause the second objective lens 18b to move, respectively, according to the drive signal.

The detector 27, the first and second drivers 28, 29a constitute a servo mechanism, wherein such means as astigmatism technique is utilized in detecting a reproduced light beam position. This enables to position the incident-light processing unit 24b.

The signal information data reproducing method on the hologram reproducing apparatus 16k constructed above includes a process to irradiate the light beam traveling from the laser light source LD to the hologram recording medium 14 through the shutter SHs, the beam expander BX and the first objective lens 18a. From the hologram recording medium 14 irradiated with the reference light beam, a reproduced light beam (0-order light and reproduced diffraction light) corresponding to the diffraction grating recorded on the hologram recording medium 14 is generated. The reproduced light beam is guided to the first inverse Fourier transform lens 20a where it is inverse-Fourier-transformed and then irradiated to the first half-mirror prism HP1. The first half-mirror prism HP1 separates the entering reproduced light beam into a component reflected vertical to the optical axis of incident light and a component transmitted along the optical axis.

The vertically reflected component of reproduced light beam is irradiated to the detector 27 through the lens 30. The position of the reproduced light beam is detected depending upon a detection signal traveling from the detector 27. Depending upon a position of the reproduced light beam, the incident-light processing unit 24b is positioned by the first driver 28 and the second objective lens 18b is positioned by the second driver 29a, respectively.

The reproduced light beam component transmitted the first half-mirror prism HP1 along the optical axis thereof is collected by the second objective lens 18b positioned. The reproduced light beam collected is irradiated to the incident-light processing unit 24b. The 0-order light of reproduced light beam transmits through the transmissive area (not shown) of incident-light processing unit 24b while the diffraction light of reproduced light beam reflects upon the reflective area (not shown) of incident-light processing unit 24b. Namely, the 0-order light and diffraction light of the reproduced light beam are separated by the incident-light processing unit 24b positioned in the above manner.

The diffraction light of reproduced light beam reflected upon the reflective area of incident-light processing unit 24b is guided to the positioned second objective lens 18b and the first half-mirror prism HP1 in order. At the first half-mirror prism HP1, it is reflected vertically to the traveling direction of reproduced light beam. The reflected diffraction light enters the image detection sensor 22. The image detection sensor 22 receives a dot-pattern image based on the diffraction light of reproduced light beam and converts it into an electric digital data signal. When it is delivered to the decoder 23, the former data is reproduced.

### <Other Hologram Recording Medium>

Although the hologram recording medium in the foregoing embodiment described that information has been recorded by a hologram recording apparatus as shown in Fig. 3, this is not limitative. Namely, the hologram recording medium applicable to the invention is satisfactorily a hologram recording medium that by irradiating a reference light beam (0-order light), generated is a reproduced light beam containing a 0-order light and diffraction light traveling along substantially the same optical axis.

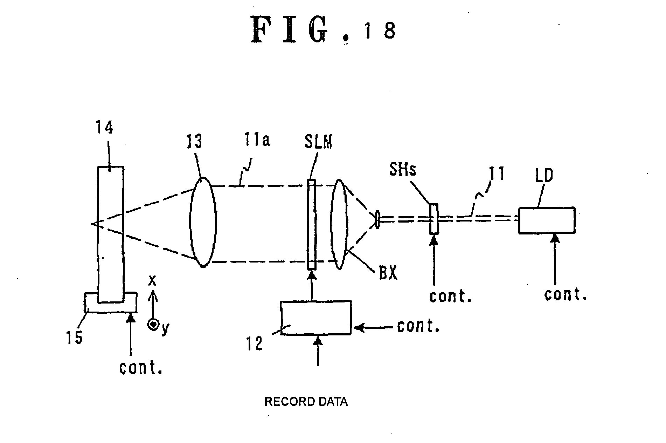

For example, it is possible to apply a hologram recording medium that information has been recorded by a hologram recording apparatus as shown in Fig. 18.

The hologram recording apparatus is formed by arranging a laser light source LD, a shutter SHs, a beam expander BX, a spatial light modulator SLM and a Fourier transform lens, on the same optical axis.

The hologram recording apparatus allows the light beam 11 emitted from the laser light source LD to transmit through the shutter SHs, the beam expander BX and the spatial light modulator SLM in the order. The spatial light modulator SLM receives the two-dimensional dot-pattern data supplied from an encoder 12 and displays a light-and-dark dot-matrix signal. The light beam 11 passed the spatial light modulator SLM contains an optically-modulated signal light component (diffraction light), also containing a reference light component (0-order light). Accordingly, interference takes place even if not separately using a signal light beam and a reference light beam as in the hologram recording apparatus shown in Fig. 3.

The reference light beam and the signal light beam are Fourier-transformed by the Fourier transform lens 13 so that a 0-order light component and a diffraction light component can form a light interference pattern in the recording medium region (not shown) of the hologram recording medium 14. The recording medium region records a diffraction-grating region by changing the refractive index according to a light intensity distribution over the light interference pattern.

It is noted that the light beam for use in hologram recording has a wave front not limited to a spherical surface (convergent light).

### <Other Hologram Reproducing Apparatus>

In the above examples, the hologram recording medium may be arranged in back of a focal point of the Fourier transform lens.

Although the examples were explained by exemplifying the method and the apparatus of reproducing a hologram, the invention apparently includes a hologram recording method, a hologram recording apparatus and a hologram recording apparatus/reproducing apparatus. For example, a hologram recording apparatus/reproducing apparatus is obtained by providing a hologram recording section including a spatial modulator in the light beam irradiator.

According to the hologram reproducing apparatus of this invention for reproducing signal information from a domain of diffraction grating of a recording media that is irradiated with a record light beam containing a coherent reference light component and a signal light component spatially modulated according to the signal information substantially on the same optical axis and is recorded an interference of the reference light component and the signal light component, comprising: a light source for emitting a coherent light beam; a light-beam irradiator for irradiating the light beam to the domain of diffraction grating of the recording medium; a light-collector for collecting a reproduced light beam reproduced by irradiating the light beam to the domain of diffraction grating toward a convergent position; an incident-light processing unit provided at the convergent position and for separating a Fourier 0-order component of the reproduced light beam and a diffraction light component of the reproduced light beam; and a detecting section for detecting the signal information from the diffraction component, because the 0-order light as a cause of noise contained in a reproduced signal can be separated from the reproduced light beam in the incident-light processing unit, it is possible to improve the S/N ratio of the signal reproduced from the signal information recorded on a hologram recording medium.

According to the hologram reproducing method of this invention for reproducing signal information from a domain of diffraction grating of a recording media that is irradiated with a record light beam containing a coherent reference light component and a signal light component spatially modulated according to the signal information substantially on the same optical axis and is recorded an interference of the reference light component and the signal light component, comprising: an irradiation step of irradiating a coherent light beam to the domain of diffraction grating of the recording medium; a light collecting step of collecting a reproduced light beam reproduced by the irradiating step toward a convergent position; an incident-light processing step of separating a Fourier 0-order component of the reproduced light beam and a diffraction light component of the reproduced light beam by an incident-light processing unit provided at the convergent position; and a reproducing step of reproducing the signal information from the diffraction component, because 0-order light grater in light intensity as compared to diffraction light can be separated from a reproduced light beam in an incident-light processing process, it is easy to detect diffraction light carrying the information recorded on a hologram recording medium.

## Claims

1. A hologram reproducing apparatus for reproducing signal information from a domain of diffraction grating of a recording media that is irradiated with a record light beam containing a coherent reference light component and a signal light component spatially modulated according to the signal information substantially on the same optical axis and is recorded an interference of the reference light component and the signal light component, comprising:
a light source for emitting a coherent light beam;
a light-beam irradiator for irradiating the light beam to the domain of diffraction grating of the recording medium;
a light collector for collecting a reproduced light beam reproduced by irradiating the light beam to the domain of diffraction grating toward a convergent position;
an incident-light processing unit provided at the convergent position and for separating a Fourier 0-order component of the reproduced light beam and a diffraction light component of the reproduced light beam; and
a detecting section for detecting the signal information from the diffraction component.

2. A hologram reproducing apparatus according to claim 1, wherein the incident-light processing unit includes an optical element for reducing a transmittance due to irradiation with the Fourier 0-order component of the reproduced light beam to a characteristic value lower than a transmittance in an absence of irradiation.

3. A hologram reproducing apparatus according to claim 1, wherein the incident-light processing unit includes an optical element for reducing a reflectance due to irradiation with the Fourier 0-order component of the reproduced light beam to a characteristic value lower than a reflectance in an absence of irradiation.

4. A hologram reproducing apparatus according to claim 1, wherein the incident-light processing unit has a reflective area to reflect the Fourier 0-order component of the reproduced light beam and a transmissive area to transmit the diffraction component of the reproduced light beam.

5. A hologram reproducing apparatus according to claim 1, wherein the incident-light processing unit has a transmissive area to transmit the Fourier 0-order component of the reproduced light beam and a reflective area to reflect the diffraction component of the reproduced light beam.

6. A hologram reproducing apparatus according to claim 4 or claim 5, including an optical-axis detecting section for detecting a position of an optical axis of the reproduced light beam, and a drive section for moving the light collector and the incident-light processing unit on a basis of a position of the optical axis detected by the optical-axis detecting section.

7. A hologram reproducing apparatus according to claim 6, wherein the optical axis detecting section receives the Fourier 0-order component of the reproduced light beam.

8. A hologram reproducing method for reproducing signal information from a domain of diffraction grating of a recording media that is irradiated with a record light beam containing a coherent reference light component and a signal light component spatially modulated according to the signal information substantially on the same optical axis and is recorded an interference of the reference light component and the signal light component, comprising:
an irradiation step of irradiating a coherent light beam to the domain of diffraction grating of the recording medium;
a light collecting step of collecting a reproduced light beam reproduced by the irradiating step toward a convergent position;
an incident-light processing step of separating a Fourier 0-order component of the reproduced light beam and a diffraction light component of the reproduced light beam by an incident-light processing unit provided at the convergent position; and
a reproducing step of reproducing the signal information from the diffraction component.

9. A hologram reproducing method according to claim 8, wherein the incident-light processing unit includes an optical element for reducing a transmittance due to irradiation with the Fourier 0-order component of the reproduced light beam to a characteristic value lower than a transmittance in an absence of irradiation.

10. A hologram reproducing method according to claim 8, wherein the incident-light processing unit includes an optical element for reducing a reflectance due to irradiation with the Fourier 0-order component of the reproduced light beam to a characteristic value lower than a reflectance in an absence of irradiation.

11. A hologram reproducing method according to claim 8, wherein the incident-light processing unit has a reflective area to reflect the Fourier 0-order component of the reproduced light beam and a transmissive area to transmit the diffraction component of the reproduced light beam.

12. A hologram reproducing method according to claim 11, wherein the incident-light processing step includes an optical-axis detecting step of detecting a position of an optical axis of the reproduced light beam, and an alignment step of aligning an optical axis of the Fourier 0-component and the reflective area together on a basis of a position of the optical axis detected by the optical-axis detecting step.

13. A hologram reproducing method according to claim 8, wherein the incident-light processing unit has a transmissive area to transmit the Fourier 0-order component of the reproduced light beam and a reflective area to reflect the diffraction component of the reproduced light beam.

14. A hologram reproducing method according to claim 13, wherein the incident-light processing step includes an optical-axis detecting step of detecting a position of an optical axis of the reproduced light beam, and an alignment step of aligning an optical axis of the Fourier 0-component and the transmissive area on a basis of a position of the optical axis detected by the optical-axis detecting step.

15. A hologram reproducing method according to claim 12 or claim 14, wherein the optical axis detecting step includes a step to receive the Fourier 0-order component of the reproduced light beam.
